(19) Europäisches Patentamt
European Patent Office
Office européen des brevets

(11) EP 4 738 450 A1

(12) **EUROPEAN PATENT APPLICATION**
published in accordance with Art. 153(4) EPC

(43) Date of publication:
06.05.2026 Bulletin 2026/19

(21) Application number: 24860410.0

(22) Date of filing: 28.08.2024

(51) International Patent Classification (IPC):
H01M 4/131 (2010.01)    H01M 4/1391 (2010.01)
H01M 4/525 (2010.01)    H01M 4/505 (2010.01)
H01M 4/62 (2006.01)    H01M 10/052 (2010.01)
H01M 10/058 (2010.01)    H01M 4/02 (2006.01)

(52) Cooperative Patent Classification (CPC):
H01M 4/02; H01M 4/131; H01M 4/1391;
H01M 4/505; H01M 4/525; H01M 4/62;
H01M 10/052; H01M 10/058; Y02E 60/10

(86) International application number:
PCT/KR2024/012861

(87) International publication number:
WO 2025/048490 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.08.2023 KR 20230113515

(71) Applicant: LG Energy Solution, Ltd.
Seoul 07335 (KR)

(72) Inventors:
• LEE, Sangryeo
  Daejeon 34122 (KR)
• BYUN, Seoungwoo
  Daejeon 34122 (KR)
• JANG, Eunji
  Daejeon 34122 (KR)
• RYU, Jihoon
  Daejeon 34122 (KR)
• LIM, Taeseob
  Daejeon 34122 (KR)
• KIM, Dong Kyu
  Daejeon 34122 (KR)
• LEE, Hyunjun
  Daejeon 34122 (KR)

(74) Representative: BCKIP Part mbB
Landsberger Straße 98
80339 München (DE)

(54) **ELECTRODE FOR LITHIUM SECONDARY BATTERY AND LITHIUM SECONDARY BATTERY**

(57) An electrode for a lithium secondary battery that includes: a metal current collector; and an active material layer that is formed on the metal current collector and comprises an electrode active material, a conductive material, and an oxide-based solid electrolyte having a lithium ion source, wherein the electrode active material and the oxide-based solid electrolyte are dispersed in the active material layer in the form of particles and have a particle size distribution of span: 1 or less. A lithium secondary battery includes the electrode as a positive electrode. A method for manufacturing the electrode for a lithium secondary battery includes: mixing and dispersing the oxide-based solid electrolyte and a solvent to prepare a solid electrolyte dispersion; mixing the solid electrolyte dispersion, the electrode active material, and the conductive material to prepare an electrode active material slurry; and applying the electrode active material slurry to an electrode current collector.

FIG. 1

**Description**

**[TECHNICAL FIELD]**

Cross Citation with Related Application(s)

This application is a national phase entry of International Application No. PCT/KR2024/012861 filed on August 28, 2024, which claims priority from and the benefit of Korean Patent Application No. 10-2023-0113515 filed on August 29, 2023, all of which are incorporated herein by reference in their entirety.

TECHNICAL FIELD

The present disclosure relates to an electrode for a lithium secondary battery that can improve output characteristics and low-temperature characteristics, etc. of a lithium secondary battery, and a lithium secondary battery comprising the same.

**[BACKGROUND]**

Recently, demand for high-capacity, high-output, long-life and high-stability lithium secondary batteries has been increased as an application area of lithium secondary batteries has rapidly expanded to power storage supply of large-area devices, such as automobiles and power storage devices, as well as electricity, electronics, communication, and power supply of electronic devices such as computers.

A lithium secondary battery is generally configured to include a positive electrode, a negative electrode, a separation membrane, a lithium salt, and an electrolyte containing an organic solvent, wherein movement of lithium ions occurs through the electrolyte in a charge and discharge process.

Lithium ions in the electrolyte exist in a solvated state surrounded by an organic solvent. Therefore, in order for the lithium ions in this electrolyte to move and be inserted into the electrode active material, lithium ions undergo a desolvation process in which lithium ions are separated or desorbed from the organic solvent molecules. Therefore, smooth progress of this desolvation process may affect the output, resistance, stability or the like of a lithium secondary battery.

On the other hand, in recent years, as higher capacity and higher output of the lithium secondary batteries are required, new electrolytes is being actively developed. In particular, in order to accelerate the desolvation of lithium ions and increase the output or the like of a lithium secondary battery, new electrolyte compositions or the like are being proposed, such as containing a lithium salt at a high concentration, or changing the composition of the organic solvent to form a locally high concentration area of a lithium salt around the electrode.

However, when applying the new electrolyte composition containing a high concentration of lithium salts, it may cause the problem of a decrease in fluidity due to an increase in the viscosity of the electrolyte. In particular, there is a disadvantage in that the ionic conductivity of the electrolyte decreases at low temperatures, which leads to a deterioration of the low-temperature characteristics of a lithium secondary battery, such as an increase in resistance or a decrease in battery output.

Therefore, there is a continuing need to develop a technology that can accelerate the desolvation of lithium ions in the electrolyte, thereby improving the output characteristics of a lithium secondary battery as well as maintaining excellent low-temperature characteristics.

**[DETAILED DESCRIPTION OF THE INVENTION]**

**[Technical Problem]**

Thus, it is an object of the present disclosure to provide an electrode for a lithium secondary battery that can accelerate the desolvation of lithium ions in the electrolyte, thereby improving the output characteristics of a lithium secondary battery as well as maintaining excellent low-temperature characteristics such as high output at low temperatures.

It is another object of the present disclosure to provide a lithium secondary battery comprising the same, which exhibit improved output characteristics and low-temperature characteristics.

**[Technical Solution]**

Hereinafter, an electrode for a lithium secondary battery, and the like according to specific aspects of the present disclosure will be described.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The terms used herein are provided to describe exemplary aspects but not to limit the inventive concept. The singular forms include plural forms unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

## Electrode for lithium secondary battery

According to an aspect of the present disclosure, there is provided an electrode for a lithium secondary battery comprising: a metal current collector; and an active material layer that is formed on the metal current collector and comprises an electrode active material, a conductive material, and an oxide-based solid electrolyte having a lithium ion source, wherein the electrode active material and the oxide-based solid electrolyte are dispersed in the active material layer in the form of particles and have a particle size distribution of span: 1 or less.

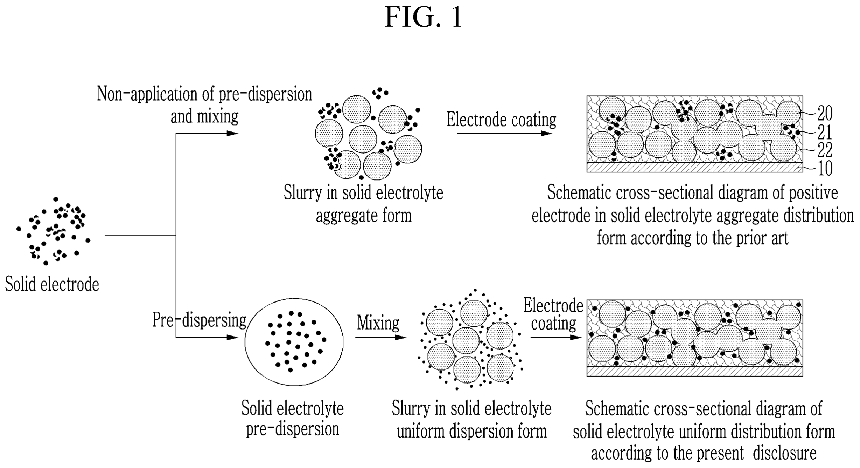

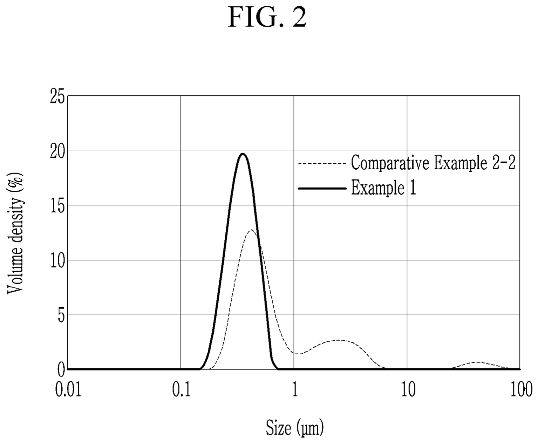

In particular, the oxide-based solid electrolyte may have a uniform particle size distribution of span: 1 or less. As a result of experiments conducted by the present inventors, as the oxide-based solid electrolyte particles satisfying a specific particle size distribution are included in the active material layer, such oxide-based solid electrolyte particles may be uniformly distributed around the active material particles within the active material layer (FIG. 2), and particularly, they may be distributed in large numbers near an interface between the active material layer and the electrolyte. This can be distinguished from the case where in a conventional active material layer, oxide-based solid electrolyte particles aggregated with each other and could not be evenly distributed (FIG. 1). Therefore, the oxide-based solid electrolyte particles can reduce the activation energy associated with the desolvation process of lithium ions in the electrolyte at the interface where the active material layer and the electrolyte come into contact with each other, and accelerate the desolvation of the lithium ions. Additionally, this can improve the lithium ion conductivity around the electrode active material particles.

Therefore, the lithium secondary battery comprising the electrode for lithium secondary battery according to an aspect of the present disclosure can accelerate the desolvation of the lithium ions and improve the lithium ion conductivity of the active material layer even without applying an electrolyte composition such as containing a high concentration of lithium salts, thereby lowering the resistance of a lithium secondary battery and improving output characteristics. As a result, it is possible to not only solve problems such as an increase in electrolyte viscosity, a decrease in fluidity, and a decrease in the ionic conductivity of the electrolyte and the output of the battery at low temperatures due to the application of the high concentration of lithium salts, etc., but also achieve excellent low-temperature characteristics of a lithium secondary battery.

Meanwhile, in the aspects of the present disclosure, an aspect in which the lithium secondary battery electrode becomes a positive electrode is mainly described, but the scope of the disclosure is not limited thereto, and thus, an electrode according to an aspect may become a negative electrode.

In an exemplary aspect, the positive electrode for a lithium secondary battery may include a metal current collector. The metal current collector is not particularly limited as long as it has conductivity while not causing a chemical change in the battery. For example, stainless steel, aluminum, nickel, titanium, baked carbon, or aluminum or stainless steel whose surface is treated with carbon, nickel, titanium, silver, etc., and the like may be used.

Further, the active material layer on the metal current collector may include a positive electrode active material, a conductive material, and an oxide-based solid electrolyte having a lithium ion source, and may optionally further include a binder.

At this time, the positive electrode active material may be a compound capable of reversibly intercalating and deintercalating lithium, and specifically, it may include lithium metal oxide containing lithium and at least one metal such as iron, cobalt, manganese, nickel, or aluminum.

Specifically, the lithium metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where 0<Y<1), $LiMn_{2-Z}Ni_ZO_4$ (where 0<Z<2), etc.), lithium-nickel-cobalt-based oxide (e.g., $LiNi_{1-Y1}Co_{Y1}O_2$ (where 0<Y1<1, etc.), lithium-manganese-cobalt-based oxide (e.g., $LiCo_{1-Y2}Mn_{Y2}O_2$ (where 0<Y2<1), $LiMn_{2-Z1}Co_{Z1}O_4$ (where 0<Z1<2), etc.), lithium-nickel-manganese-cobalt-based oxide (e.g., $Li(Ni_pCo_qMn_r)O_2$ (where 0<p<1, 0<q<1, 0<r<1, and p+q+r=1) or $Li(Ni_{p1}Co_{q1}Mn_{r1})O_4$ (where 0<p1<2, 0<q1<2, 0<r1<2, and p1+q1+r1=2), etc.), or lithium-nickel-cobalt-transition metal(M) oxide (e.g., $Li(Ni_{p2}Co_{q2}Mn_{r2}M_{s2})O_2$ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., $Li_{1+a}Fe_{1-}$

$_xM_x(PO_{4-b})X_b$ (where M is at least one selected from Al, Mg, and Ti, X is at least one selected from F, S and N, $-0.5 \leq a \leq 0.5$, $0 \leq x \leq 0.5$, $0 \leq b \leq 0.1$), or the like, and any one thereof or a compound of two or more thereof may be used.

Among these, the positive electrode active material includes lithium metal oxide containing lithium, and two or more metals selected from the group consisting of nickel, manganese, cobalt, and aluminum, wherein the lithium metal oxide may contain 60 mol% or more, or 60 to 99 mol%, or 70 to 95 mol% of nickel, based on the total metal content excluding lithium. Such a lithium metal oxide may be represented, for example, by the following Chemical Formula 1:

[Chemical Formula 1]   $Li_xNi_aCo_bM^1_cM^2_dO_2$

wherein in Chemical Formula 1, the $M^1$ may be one or more selected from Mn and Al, or a combination thereof, $M^2$ may be one or more selected from the group consisting of Zr, B, W, Mg, Ce, Hf, Ta, La, Ti, Sr, Ba, F, P and S, $0.90 \leq x \leq 1.1$, or $0.95 \leq x \leq 1.08$, or $1.0 \leq x \leq 1.08$, and $0.60 \leq a < 1.0$, or $0.70 \leq a \leq 0.99$, or $0.80 \leq a \leq 0.95$.

As the lithium metal oxide containing such a high content of nickel is used as a positive electrode active material, and combined with an oxide-based solid electrolyte, it is possible to further improve the output and capacity characteristics of a lithium secondary battery.

The above-mentioned positive electrode active material may be included in an amount of 60 to 99% by weight, or 70 to 99% by weight, or 80 to 98% by weight, based on the total weight of the active material layer.

In an exemplary aspect, any solid electrolyte that has a lithium ion source including lithium in its structure, and has a form of lithium metal oxide or lithium metal phosphate can be used as the oxide-based solid electrolyte.

Specific examples thereof include at least one lithium metal oxide or lithium metal phosphate selected from Nasicon-type solid electrolyte, Lisicon-type solid electrolyte, Garnet-type solid electrolyte, Perovskite-type solid electrolyte, and LiPON-type solid electrolyte. More specific examples thereof include at least one selected from the group consisting of LAGP(lithium aluminum germanium phosphate)-based compound, LLZO(lithium lanthanum zirconium oxide)-based compound, LATP(lithium aluminum titanium phosphate)-based compound, LLZTO(lithium lanthanum zirconium tantalum oxide)-based compound, LLTO(lithium lanthanum titanium oxide)-based compound, LSTP(lithium silicon titanium phosphate)-based compound, and LGPO(lithium germanium phosphate)-based compound.

Among these, from the viewpoint of accelerating the desolvation of lithium ions at an interface between the active material layer and the electrolyte and improving the ionic conductivity and output of a lithium secondary battery, a Nasicon-type solid electrolyte such as the LAGP-based compound or LATP-based compound can be appropriately used.

In an exemplary aspect, the oxide-based solid electrolyte may have one or more particle size distributions of D50: 100 nm to 1 μm and D90: 400 nm to 1.5 μm. For example, the oxide-based solid electrolyte may have a particle size distribution of D50: 300 to 700 nm and/or D90: 400 to 900 nm. When the oxide-based solid electrolyte particles are uniformly distributed in the above ranges, they may have excellent output characteristics and low-temperature characteristics.

In an exemplary aspect, the oxide-based solid electrolyte may have a sample variance of 0.04 or less, as expressed by the following Mathematical Equation 1 through EDS analysis.

$$[Mathematical\ Equation\ 1]$$
$$s^2 = \frac{\sum(y - \bar{y})^2}{n-1} = \frac{SS}{df}$$

wherein, $S^2$ is the sample variance, y is the variable, $\bar{y}$ is the sample mean, n is the sample size, SS is the sum of squared deviations, and df is the degree of freedom.

For example, the sample variance may be 0.04 or less, or 0.03 or less, and if the sample variance exceeds 0.04, uniform distribution of the oxide-based solid electrolyte may not be ensured, and thus output characteristics and low-temperature characteristics may not be ensured.

Specifically, the sample variance can be calculated through the Mathematical Equation 1 by extracting pixel information of an EDS Ti and/or P element mapping image, dividing it into n uniform gratings, and setting it for each sample. The sample variance value represents the distribution of Ti and P relative to the degree of dispersion between gratings, which means that the smaller the sample variance value, the more uniformly the Ti and P elements are distributed over the entire grating. Therefore, it shows that the smaller the sample variance value, the more uniformly the oxide-based solid electrolyte (LATP) in the positive electrode is distributed.

In an exemplary aspect, from the viewpoint of accelerating the desolvation of lithium ions at the interface between the active material layer and the electrolyte and improving the lithium ion conductivity, etc., without inhibiting the insertion and desorption process of lithium ions by the positive electrode active material, the oxide-based solid electrolyte may be included in an amount of 0.3 to 5 parts by weight based on 100 parts by weight of the electrode active material. For example, the oxide-based solid electrolyte may be included in an amount of 0.5 to 5 parts by weight, or 1 to 4 parts by weight, or 2 to 3.5 parts by weight based on 100 parts by weight of the positive electrode active material.

In an exemplary aspect, the conductive material included in the active material layer is a component for further improving the conductivity of the positive electrode active material. Such a conductive material is not particularly limited as long as it has conductivity while not causing a chemical change in the battery, and, for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used. Among these, the conductive material includes conductive nanomaterials such as carbon nanotubes or carbon nanofibers, which can further lower the resistance of the lithium secondary battery comprising a positive electrode according to one aspect and further improve output characteristics, and the like.

Typically, the conductive material may be included in an amount of 1 to 20% by weight, or 1 to 15% by weight, or 1 to 10% by weight, based on the total weight of the positive electrode active material layer.

The binder selectively included in the active material layer is a component that assists in the bonding between the positive electrode active material and the conductive material and in the bonding to the current collector. Examples of the binder may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluororubber or the like. Mixtures or copolymers of two or more selected from these may also be used.

Typically, the binder may be included in an amount of 1 to 20% by weight, or 1 to 15% by weight, or 1 to 10% by weight based on the total weight of the positive electrode active material layer.

In addition, a filler may be optionally added to the positive electrode as a component for inhibiting the expansion thereof. Such a filler is not particularly limited as long as it can inhibit the expansion of the electrode while not causing a chemical change in the battery, and examples thereof may include olefinic polymers such as polyethylene and polypropylene; fibrous materials such as glass fibers and carbon fibers.

In another aspect of the present disclosure, there is provided a method for manufacturing an electrode for a lithium secondary battery, the method comprising the steps of: mixing and dispersing an oxide-based solid electrolyte and a solvent to prepare a solid electrolyte dispersion; mixing the solid electrolyte dispersion, an electrode active material, and a conductive material to prepare an electrode active material slurry; and applying the electrode active material slurry to an electrode current collector.

In an exemplary aspect, the step of preparing a solid electrolyte dispersion may be performed using a bead-milling method. Prior to manufacturing the electrode active material slurry, the oxide-based solid electrolyte and the solvent prior are pre-dispersed, so that the oxide-based solid electrolyte particles can be uniformly distributed around the electrode active material particles within the active material layer.

Meanwhile, a positive electrode for a lithium secondary battery according to an exemplary aspect can be manufactured, for example, by dispersing and mixing the positive electrode active material, the oxide-based solid electrolyte, the binder, the conductive material and the like in a dispersion medium (solvent) to form a slurry, and coating the slurry onto a metal current collector, followed by drying and rolling. At this time, the dispersion medium may be NMP(N-methyl-2-pyrrolidone), DMF(dimethyl formamide), DMSO(dimethyl sulfoxide), ethanol, isopropanol, water, or a mixture thereof, but are not necessarily limited thereto.

**Lithium secondary battery**

In another aspect of the present disclosure, there is provided a lithium secondary battery comprising: a positive electrode; a negative electrode; and an electrolyte containing a lithium salt and a non-aqueous organic solvent, wherein the above-mentioned electrode for a lithium secondary battery is included as a positive electrode. As the lithium secondary battery according to another aspect of the present disclosure comprises the electrode (e.g., positive electrode) according to the above-described aspect, it may exhibit excellent output characteristics as well as low-temperature characteristics.

In the lithium secondary battery of another aspect, the negative electrode may have a conventional configuration known in the art. For example, the negative electrode may include a negative electrode current collector, and a negative electrode active material layer formed on the negative electrode current collector, wherein the negative electrode active material layer may include, for example, a negative electrode active material and, if necessary, additives such as a conductive material, a binder, and a filler. In addition, such a negative electrode can be formed by a general method of dispersing and mixing each component of the negative electrode active material layer in a dispersion medium (solvent) to form a slurry, coating the slurry onto a negative electrode current collector, followed by drying and rolling.

At this time, the negative electrode current collector may be platinum(Pt), gold(Au), palladium(Pd), iridium(Ir), silver(Ag), ruthenium(Ru), nickel(Ni), stainless steel (STS), copper(Cu), molybdenum(Mo), chromium(Cr), carbon(C), titanium(Ti), tungsten(W), ITO(In doped $SnO_2$), FTO(F doped $SnO_2$), or an alloy thereof, or copper(Cu) or stainless steel whose surface is treated with carbon(C), nickel(Ni), titanium(Ti) or silver(Ag), or the like, but is not necessarily limited thereto. The shape of the negative electrode current collector may be in the form of a foil, a film, a sheet, a punched form, a porous body, a foam or the like.

Further, as the negative electrode active material, a compound capable of reversible intercalation and deintercalation of lithium may be used. A specific example thereof may be a carbonaceous material such as artificial graphite, natural graphite, graphitized carbon fiber or amorphous carbon; a metallic compound capable of alloying with lithium, such as Si, Al, Sn, Pb, Sb, Zn, Bi, In, Mg, Ga, Cd, a Si alloy, a Sn alloy or an Al alloy; a metal oxide capable of doping and dedoping lithium such as $SiO\beta(0 < \beta < 2)$, $SnO_2$, vanadium oxide, or lithium vanadium oxide; or a composite including the metallic compound and the carbonaceous material such as a Si-C composite or a Sn-C composite, and any one or a mixture of two or more thereof may be used. Further, as the negative electrode active material, a metal lithium thin film may be used.

In addition, as a carbonaceous material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The above-mentioned negative electrode active material may be included in an amount of 60 to 99% by weight, or 70 to 99% by weight, or 80 to 98% by weight, based on the total weight of the negative electrode active material layer.

In the other aspects, the negative electrode may not include a negative electrode active material layer, but may include only a negative electrode current collector. In such a negative electrode, lithium ions moved from the positive electrode in a charge and discharge process are electrodeposited on the negative electrode current collector to form a lithium metal layer, and this lithium metal layer can function as a negative electrode active material.

In an exemplary aspect, the binder and conductive material included in the negative electrode active material layer can be the same as those previously described for the positive electrode, and therefore, further description thereof will be omitted. Furthermore, when the electrode for a lithium secondary battery of the one aspect described above becomes a negative electrode, the negative electrode active material layer may further include an oxide-based solid electrolyte having the lithium ion source described above. In this case, the oxide-based solid electrolyte can satisfy the particle size distribution of the above-mentioned $D_{50}$, $D_{90}$ and span value ranges.

The lithium secondary battery of the other aspect described above includes an electrolyte containing lithium salt and a non-aqueous organic solvent. Such an electrolyte functions as a transfer medium for lithium ions between the positive electrode and the negative electrode, wherein such lithium ions exist in the electrolyte in a solvated state, while they can be inserted into the electrode active material through desolvation at the interface between the electrolyte and the electrode. The secondary battery of the other aspect can accelerate this desolvation and exhibit more improved output characteristics as described above.

The lithium salt contained in the electrolyte is used as a medium for transferring ions within a lithium secondary battery. For example, the lithium salt may include $Li^+$ as a cation, and may together include an anion selected from the group consisting of $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_2^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$ and $SCN^-$.

For example, the lithium salt may include at least one selected from the group consisting of LiCl, LiBr, LiI, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, LiFSI (Lithium bis(fluorosulfonyl)imide, $LiN(SO_2F)_2$), LiBETI (lithium bis(perfluoroethanesulfonyl)imide, $LiN(SO_2CF_2CF_3)_2$ and LiTFSI (lithium bis(trifluoromethanesulfonyl)imide, $LiN(SO_2CF_3)_2$).

The concentration of the lithium salt can be appropriately changed within the normally usable range, and may be included in the electrolyte at a concentration of 0.5M to 6M, or at a concentration of 1M to 5M.

In a more specific example, the electrolyte may include the lithium salt at a relatively low concentration of 0.5M or more and less than 2M, or 0.7M to 1.5M. Even in such a case, as desolvation of lithium ions is accelerated by the action of the electrode of the one aspect described above, the lithium secondary battery of the other aspects may exhibit improved output characteristics. As a result, it is possible to not only solve problems such as an increase in electrolyte viscosity, a decrease in fluidity, and a decrease in electrolyte ionic conductivity and battery output at low temperatures due to the application of an electrolyte composition containing the lithium salt at a high concentration, but also achieve excellent low-temperature characteristics of a lithium secondary battery.

On the other hand, by applying the electrode for a lithium ion battery according to one aspect, the lithium ion conductivity can be improved and the resistance can be reduced even at low temperatures. Thereby, it is possible to reduce deterioration in low-temperature output characteristics due to high concentration of lithium salts, and the like.

Meanwhile, the kind of a non-aqueous organic solvent that can be included in the electrolyte is not particularly limited, and any organic solvent that has been known to be applicable to the electrolyte of a lithium ion battery can be used.

Examples of such organic solvents include at least one selected from the group consisting of a carbonate-based solvent, an ether-based solvent, a nitrile-based solvent, a phosphate-based solvent, and a sulfone-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like, and the phosphate-based solvent may include trimethyl phosphate, triethyl phosphate, 2-(2,2,2-trifluoroethoxy)-1,3,2-dioxaphosphorane 2-oxide, or the like.

Further, the ether-based solvent may include dibutyl ether, tetraglyme, diglyme, dimethoxyethane, or a tetrahydrofuran derivative such as 2-methyltetrahydrofuran, and the nitrile-based solvent may include succinonitrile, adiponitrile, sebaconitrile, acetonitrile, propionitrile, or the like. Further, the sulfone-based solvent may include dimethyl sulfone, ethylmethyl sulfone, sulforane, or the like.

Meanwhile, the electrolyte may, in addition to the lithium salt and the non-aqueous organic solvent, further include a diluent that exhibits a solubility of the lithium salt that is at least 10 times lower than that of the non-aqueous organic solvent. Such a diluent is an organic solvent that is miscible with the non-aqueous organic solvent without substantially showing solubility in the lithium salt. For example, it may be an ether-based solvent having a fluorine-substituted alkyl group, and more specifically, it may include one or more selected from the group consisting of 1,1,2,2-tetrafluoroethyl-2,2,3,3-tetrafluoropropyl ether(TTE), bis(2,2,2-trifluoroethyl)ether (BTFE), 1, 1,2,2-tetrafluoroethyl-2,2,2-trifluoroethyl ether(TFTFE), methoxynona fluorobutane(MOFB) and ethoxynona fluorobutane(EOFB).

When such a diluent is further included, a locally high concentration of lithium salt may exist in the non-aqueous organic solvent in the electrolyte, and a lithium salt may not substantially exist in the diluent. As a locally high concentration of lithium salt exists in a solvated form in the electrolyte in this way, the output characteristics of the lithium secondary battery can be further improved, and also the increase in viscosity and the decrease in fluidity of the electrolyte can be reduced. In addition, if the electrode of one aspect is applied together with this locally high concentration of salt electrolyte, the lithium ion conductivity can be improved and the resistance can be reduced even at low temperatures, thereby reducing the deterioration of low-temperature output characteristics caused by high-concentration lithium salt, etc.

The amount of the diluent used can be adjusted depending on the type of non-aqueous organic solvent and lithium salt, or the overall concentration of the lithium salt. For example, the diluent : the non-aqueous organic solvent may be included in the electrolyte at a molar ratio of 1:0.2 to 1:5, or 1:0.5 to 1:2.

Meanwhile, the lithium secondary battery of the other aspects described above may further include a porous separation membrane interposed between the positive electrode and the negative electrode.

Such a porous separation membrane can be made of olefinic polymers such as polyethylene and polypropylene, glass fiber, etc. in the form of a sheet, a multilayer membrane, a microporous film, a woven fabric, and a nonwoven fabric, or the like, but is not necessarily limited thereto. However, it may be preferable to apply porous polyethylene or porous glass fiber non-woven fabric (glass filter) as a separation membrane, and it may be more preferable to apply a porous polyethylene as a separation membrane. The separation membrane may be an insulating thin film with high ion permeability and mechanical strength, and the pore diameter of the separation membrane may generally range from 0.01 to 10 $\mu$m, and the thickness may generally range from 5 to 300 $\mu$m, but are not limited thereto.

In addition, in another aspect of the lithium secondary battery, the separation membrane may not be interposed, but the above-mentioned electrolyte may be interposed between the positive electrode and the negative electrode in the form of an electrolyte membrane or an electrolyte film. At this time, the electrolyte membrane or the electrolyte film may be a form containing the above-mentioned lithium salt and non-aqueous organic solvent in a polymer matrix, As the polymer matrix, a well-known polymer-based solid electrolyte or the like may be used. In this case, the lithium secondary battery of the other aspects may be a semi-solid-state battery that uses a liquid electrolyte and a solid-state electrolyte in combination.

Meanwhile, the lithium secondary battery of another aspect may be prepared according to a conventional method in the art. For example, the lithium secondary battery can be prepared by housing an electrode assembly including a positive electrode, a negative electrode, and a separation membrane (or electrolyte membrane) in a case, and injecting and impregnating the above-mentioned electrolyte in the case.

Such a lithium secondary battery can be applied not only to a battery cell used as power sources for small-sized devices, but can also be particularly suitably used as a unit battery in a battery module, which is a power source for medium-sized and large-sized devices.

**[Advantageous Effects]**

The electrode for a lithium secondary battery of the present disclosure includes oxide-based solid electrolyte particles dispersed in an active material layer, wherein the oxide-based solid electrolyte particles may have a particle size distribution having a specific range of $D_{50}$, $D_{90}$ and span values. Such oxide-based solid electrolyte particles can be uniformly distributed around the electrode active material particles in the active material layer, and may be distributed in large numbers near the interface between the active material layer and the electrolyte.

Such oxide-based solid electrolyte particles can reduce the activation energy associated with the desolvation process of lithium ions in the electrolyte at the interface where the electrode active material and the electrolyte come into contact with each other, and can accelerate the desolvation of the lithium ions and thus improve the output characteristics of the lithium secondary battery.

Furthermore, since it is possible to improve the output characteristics of a lithium secondary battery even without applying new electrolyte compositions such as containing a high concentration of lithium salts, problems such as an increase in electrolyte viscosity, a decrease in fluidity, and a decrease in electrolyte ionic conductivity and battery output at low temperatures due to application of the new electrolyte composition can be solved, and excellent low-temperature characteristics of a lithium secondary battery can be achieved.

In addition, even when an electrolyte composition containing the high-concentration of lithium salts, etc. is applied together, desolvation of lithium ions can be smoothly performed by the application of the electrode of the present disclosure, thereby improving lithium ion conductivity, reducing the resistance, and improving efficiency and rate characteristics. Therefore, by using high-concentration lithium salts and the like, not only the output characteristics of the lithium secondary battery can be further improved, but also the deterioration of low-temperature characteristics can be reduced.

Therefore, the present disclosure can greatly contribute to the development of next-generation lithium secondary batteries that exhibit improved output characteristics and low-temperature characteristics.

## [BRIEF DESCRIPTION OF THE DRAWINGS]

FIG. 1 schematically illustrates a conventional solid electrolyte non-uniformly distributed active material to which the pre-dispersion of the oxide-based solid electrolyte was not applied, and a solid electrolyte uniformly distributed active material to which dispersion of the solid electrolyte was applied in accordance with an aspect of the present disclosure.

FIG. 2 shows the particle size distribution of the pre-dispersion of the oxide-based solid electrolyte according to Example 1 and the oxide-based solid electrolyte particle powder of Comparative Example 2-2.

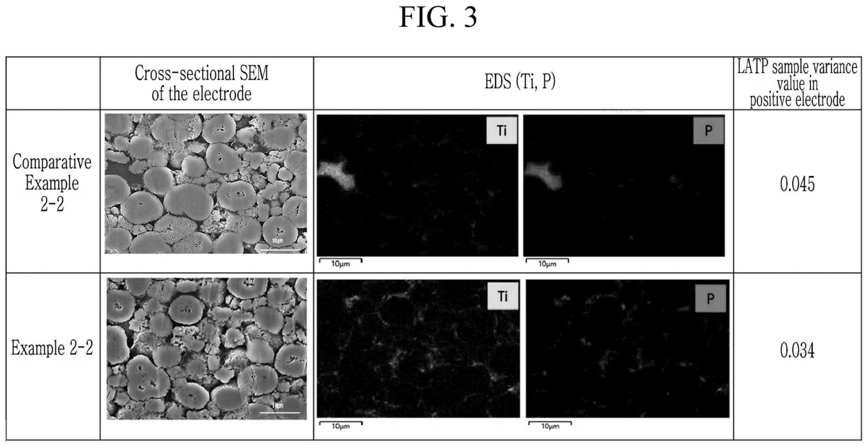

FIG. 3 shows cross-sectional SEM images of the positive electrode applying the solid electrolyte distribution active material according to Comparative Example 2-2 and Example 2-2, and mapping images of Ti and P elements by EDS analysis. In addition, it shows the particle size sample variance values of the oxide-based solid electrolyte in the positive electrode.

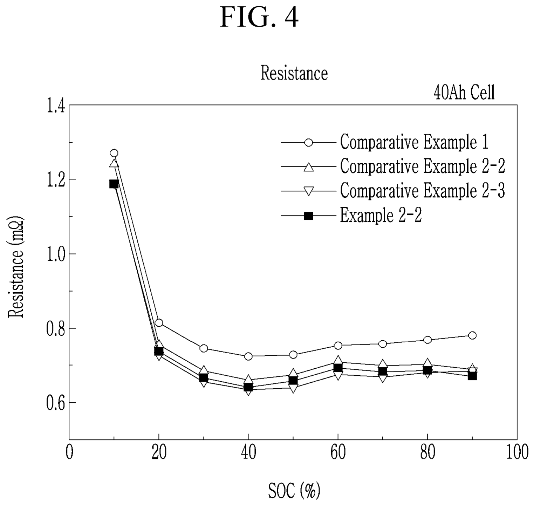

FIG. 4 is a graph showing a comparison of the results of measuring the resistance for each state of charge(SOC) for the lithium secondary batteries applying the positive electrodes of Comparative Example 1, Comparative Example 2-2, Comparative Example 2-3, and Example 2-2.

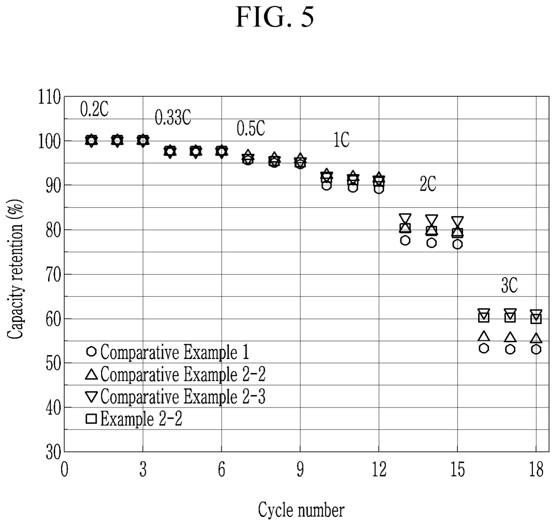

FIG. 5 is a graph showing a comparison of the capacity ratio at each C-rate relative to the 0.2C discharge capacity when performing charge/discharge three times at each C-rate of 0.2C, 0.33C, 0.5C, 1C, 2C, and 3C for the lithium secondary batteries applying the positive electrodes of Comparative Example 1, Comparative Example 2-2, Comparative Example 2-3, and Example 2-2.

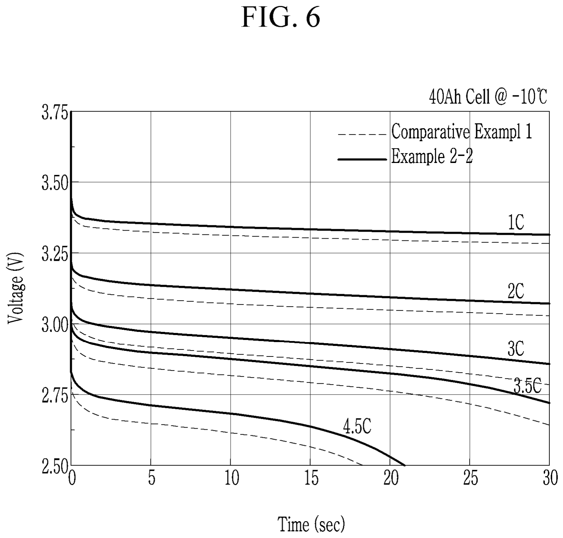

FIG. 6 is a graph comparing the voltage drop degree for each discharge time while progressing discharge for the lithium secondary batteries applying the positive electrodes of Comparative Example 1 and Example 2-2 from a state of charge (SOC) of 50% at -10°C for 30 seconds.

## [DETAILED DESCRIPTION OF THE EMBODIMENTS]

Hereinafter, aspects of the present disclosure will be described so that those skilled in the art can easily carry out them. However, the present disclosure can be modified in various different ways, and is not limited to the aspects set forth herein.

## Example 1: Preparation of solid electrolyte nanoparticle dispersion

50 g of $LiAl_{0.3}Ti_{1.7}(PO_4)_3$ oxide-based solid electrolyte(LATP) with an average primary particle size of 300 nm and 50 g of NMP were mixed, a bead mill was added to the mixed liquid, and then subjected to dispersion treatment for 40 minutes using a spike mill to prepare a solid electrolyte nanoparticle dispersion.

## Example 2-1: Manufacturing of lithium secondary battery

A lithium nickel cobalt manganese composite oxide (NCM 811; D50: 10 $\mu$m) containing 80 mol% of nickel among all the transition metals was used as a positive electrode active material, carbon nanotubes was used as a conductive material, and polyvinylidene fluoride(PVDF) was used as a binder.

96.5 parts by weight of a positive electrode active material, 1.5 parts by weight of a conductive material, 1.5 parts by weight of a binder, and 0.5 parts by weight of the oxide-based solid electrolyte(LATP) of Example 1 were mixed to prepare a positive electrode active material slurry. The prepared slurry was coated onto an aluminum current collector and dried to prepare a positive electrode. Graphite was used as a negative electrode active material, and the negative electrode active material: conductive material: binder were mixed in a weight ratio of 96.5:1.5:2 without using an oxide-based solid electrolyte, and the same process as for the positive electrode was performed to manufacture the negative electrode.

The prepared positive electrode and negative electrode were positioned so as to face each other, a polyethylene(PE) separation membrane with a thickness of 15 $\mu$m was interposed between them, and filled with an electrolytic solution to manufacture a bi-cell type lithium secondary battery. At this time, the electrolytic solution was manufactured by dissolving LiFSI at a concentration of 1.0 M in an organic solvent consisting of ethylene carbonate/ethyl methyl carbonate (EC/EMC mixed volume ratio of 3/7).

### Example 2-2: Manufacturing of lithium secondary battery

A lithium secondary battery was manufactured in the same manner as in Example 2-1, except that 96 parts by weight of a positive electrode active material, 1.5 parts by weight of a conductive material, 1.5 parts by weight of a binder, and 1 part by weight of the oxide-based solid electrolyte (LATP) of Example 1 were mixed to prepare a positive electrode active material slurry.

### Example 2-3: Manufacturing of lithium secondary battery

A lithium secondary battery was manufactured in the same manner as in Example 2-1, except that 94 parts by weight of a positive electrode active material, 1.5 parts by weight of a conductive material, 1.5 parts by weight of a binder, and 3 parts by weight of the oxide-based solid electrolyte(LATP) of Example 1 were mixed to prepare a positive electrode active material slurry.

### Comparative Example 1: Manufacturing of lithium secondary battery

97 parts by weight of a positive electrode active material, 1.5 parts by weight of a conductive material, and 1.5 parts by weight of a binder were mixed to prepare a positive electrode active material slurry. The prepared slurry was coated onto an aluminum current collector and dried to prepare a positive electrode. The positive electrode active material, conductive material, binder, and negative electrode were the same as those used in Example 2-1.

The prepared positive electrode and negative electrode were positioned so as to face each other, a polyethylene(PE) separation membrane with a thickness of 20 $\mu$m was interposed between them, and filled with an electrolytic solution to manufacture a bi-cell type lithium secondary battery. At this time, the electrolytic solution was manufactured by dissolving LiFSI at a concentration of 1.0 M in an organic solvent consisting of ethylene carbonate/ethyl methyl carbonate (EC/EMC mixed volume ratio of 3/7).

### Comparative Example 2-1: Manufacturing of lithium secondary battery

A lithium secondary battery was manufactured in the same manner as in Example 2-1, except that 96.5 parts by weight of a positive electrode active material, 1.5 parts by weight of a conductive material, 1.5 parts by weight of a binder, and 0.5 part by weight of $LiAl_{0.3}Ti_{1.7}(PO_4)_3$ oxide-based solid electrolyte(LATP) having an average primary particle size of 300 nm were mixed to prepare a positive electrode active material slurry.

### Comparative Example 2-2: Manufacturing of lithium secondary battery

A lithium secondary battery was manufactured in the same manner as in Example 2-1, except that 96 parts by weight of a positive electrode active material, 1.5 parts by weight of a conductive material, 1.5 parts by weight of a binder, and 1 part by weight of $LiAl_{0.3}Ti_{1.7}(PO_4)_3$ oxide-based solid electrolyte(LATP) having an average primary particle size of 300 nm were mixed to prepare a positive electrode active material slurry.

### Comparative Example 2-3: Manufacturing of lithium secondary battery

A lithium secondary battery was manufactured in the same manner as in Example 2-1, except that 94 parts by weight of a positive electrode active material, 1.5 parts by weight of a conductive material, 1.5 parts by weight of a binder, and 3 parts by weight of $LiAl_{0.3}Ti_{1.7}(PO_4)_3$ oxide-based solid electrolyte(LATP) having an average primary particle size of 300 nm were mixed to prepare a positive electrode active material slurry.

**Comparative Example 2-4: Manufacturing of lithium secondary battery**

A lithium secondary battery was manufactured in the same manner as in Example 2-1, except that 93 parts by weight of a positive electrode active material, 1.5 parts by weight of a conductive material, 1.5 parts by weight of a binder, and 4 parts by weight of $LiAl_{0.3}Ti_{1.7}(PO_4)_3$ oxide-based solid electrolyte(LATP) having an average primary particle size of 300 nm were mixed to prepare a positive electrode active material slurry.

**Experimental Example 1: Particle size analysis**

The Z-average particle size of LATP of the dispersion of Example 1 was measured using a laser diffraction particle size measuring device (Malvern Mastersizer 3000). Specifically, 3 ml of the pre-dispersion of Example 1 was collected, and diluted 1000 times with NMP solvent to measure the particle size. In addition, the LATP particle powder of Comparative Example 2-2 was diluted in the same manner to measure the particle size. The results are shown in Table 1 and FIG. 2 below.

[Table 1]

| Sample | Dx(10) ($\mu$m) | Dx(50) ($\mu$m) | Dx(90) ($\mu$m) | span |
|---|---|---|---|---|
| Comparative Example 2-2 (LATP non-dispersed) | 0.302 | 0.512 | 3.3 | 5.766 |
| Example 1 (LATP dispersed) | 0.234 | 0.345 | 0.495 | 0.757 |

As a result, it was confirmed that as compared to Comparative Example 2-2, which is a LATP-undispersed sample, the oxide-based solid electrolyte nanoparticle pre-dispersion of Example 1 had a relatively small average particle size of D50 and D90, and was uniformly dispersed while the span value was significantly reduced to 1 or less. In addition, it was confirmed by the sample variance value that the uniform dispersion was mixed with the positive electrode active material to form a uniform distribution of the oxide-based solid electrolyte nanoparticles in the positive electrode.

**Experimental Example 2: Analysis of nanoparticle distribution in the electrode based on EDS**

Among the results of SEM and EDS analysis of the positive electrode cross section, the distribution degree of the oxide-based solid electrolyte(LATP) in the electrode was analyzed based on the mapping images of Ti and P elements of the oxide-based solid electrolyte LATP.

First, the data was converted and extracted into an Excel file format based on the pixel information of the EDS Ti and P element mapping image. The extracted data was divided into 1,150 grids (50 X 23) and set as samples, and the sample variance of the Ti and P elements was calculated. The specific sample variance was obtained through the following Mathematical Equation 1.

[Mathematical Equation 1]

$$s^2 = \frac{\sum(y - \bar{y})^2}{n - 1} = \frac{SS}{df}$$

wherein, $S^2$ is the sample variance, y is the variable, $\bar{y}$ is the sample mean, n is the sample size, SS is the sum of squared deviations, and df is the degree of freedom.

As a result, FIG. 3 shows Ti and P element images in the EDS analysis of Comparative Example 2-2, wherein the sample variance was 0.045. In addition, it shows Ti and P element images from the EDS analysis of Example 2-2, wherein the sample variance was 0.034, confirming that LATP is relatively more uniformly distributed within the positive electrode.

**Experimental Example 3: Evaluation of charge/discharge characteristics**

For the lithium secondary batteries of Example 2-2 and Comparative Example 1, Comparative Example 2-2, and Comparative Example 2-3, the resistance for each state of charge(SOC) was measured while repeatedly performing charge/discharge test at room temperature (about 25°C) under the conditions: 1) 0.2C~0.33C charge (cut-off: 4.2V, 0.05C)

**EP 4 738 450 A1**

and 2) 0.2C~ 0.33C discharge (cut-off: 2.5V).

Specifically, the above charge/discharge test was repeatedly performed under SOC settings of SOC 90%, 80%, 70%, 60%, 50%, 40%, 30%, 20% and 10%, and after each charge/discharge, the direct current resistances (2.5C discharge (cut-off: 10s or 2V)) were measured, respectively. The results of resistance measurement for each state of charge are shown in FIG. 4.

As a result, referring to FIG. 4, it was confirmed that Example 2-2 exhibits lower resistance and higher ionic conductivity for each state of charge compared to Comparative Example 1.

**Experimental Example 4: Evaluation of C-rate characteristics**

For the lithium secondary batteries of Examples 2-1, 2-2 and 2-3 and Comparative Examples 1, 2-1, 2-2 and 2-3, the capacity ratio at each C-rate was measured while repeatedly performing charge/discharge test at room temperature (about 25°C) under the conditions: 1) 0.2C charge (cut-off: 4.2V, 0.05C) and 2) 0.2C, 0.33C, 0.5C, 1C, 2C and 3C discharge (cut-off: 2.5V). The results are shown in Table 2 below and FIG. 5.

[Table 2]

| | Active material (part by weight) | LATP (part by weight) | LATP pre-dispersion | DC-IR@SOC 50% (mΩ) | Capacity retention (%, 2C) | Capacity retention (%, 3C) |
|---|---|---|---|---|---|---|
| Comparative Example 1 | 97.5 | 0 | - | 0.727 | 77.5 | 53.2 |
| Comparative Example 2-1 | 97.0 | 0.5 | × | 0.717 | 79.7 | 53.4 |
| Comparative Example 2-2 | 96.5 | 1 | × | 0.671 | 80.4 | 55.7 |
| Comparative Example 2-3 | 94.5 | 3 | × | 0.639 | 82.7 | 61.4 |
| Comparative Example 2-4 | 93.5 | 4 | × | 0.665 | 77.8 | 47.2 |
| Example 2-1 | 97.0 | 0.5 | ○ | 0.676 | 80.6 | 54.8 |
| Example 2-2 | 96.5 | 1 | ○ | 0.659 | 80.3 | 60.2 |
| Example 2-3 | 94.5 | 3 | ○ | 0.708 | 78.0 | 51.3 |

As shown in Table 2, it is confirmed that the lithium secondary battery of Example 2-2 applying the uniform oxide-based solid electrolyte LATP pre-dispersion exhibits more excellent characteristics in terms of resistance and C-rate efficiency than Comparative Example 2-2.

**Experimental Example 5: Evaluation of low-temperature characteristics**

For the lithium secondary batteries of Example 2-2 and Comparative Example 1, a discharge test was performed for 30 seconds starting at SOC 50% at a temperature of -10°C.

Specifically, first, charge was performed up to SOC 50% under conditions of 0.1C~0.33C at a temperature of 25°C. Subsequently, the lithium secondary battery with SOC 50% was stored in a chamber at -10°C for 3 to 5 hours, and the temperature of the lithium secondary battery was cooled to -10°C. Then, while progressing the discharge to a cut-off of 30 s or 2.5 V under the condition of 1C, the degree of voltage drop for each discharge time was measured.

Then, after progressing the charge again by the discharge amount under the conditions of -10°C and 0.1C, the discharge test was repeatedly performed while changing the discharge rate from 1C to 2C, 3C, 3.5C and 4.5C. Through the above process, while the discharge was progressed for 30 seconds at each discharge rate, the degree of voltage drop for each discharge time was measured, and shown in FIG. 6b.

Referring to FIG. 6, it was confirmed that Example 2-2 is low in the degree of voltage drop in the early stage of discharge and exhibits excellent output characteristics as compared to Comparative Example 1 at a low temperature of -10°C.

**Claims**

1. An electrode for a lithium secondary battery comprising:

11

a metal current collector; and

an active material layer that is formed on the metal current collector and comprises an electrode active material, a conductive material, and an oxide-based solid electrolyte having a lithium ion source,

wherein the electrode active material and the oxide-based solid electrolyte are particles dispersed in the active material layer and have a particle size distribution of span: 1 or less.

2. The electrode for a lithium secondary battery of claim 1, wherein:

the electrode active material comprises a lithium metal oxide including lithium, and two or more of nickel, manganese, cobalt or aluminum, and

the lithium metal oxide includes60 mol.% or more of nickel based on a total metal content excluding lithium.

3. The electrode for a lithium secondary battery of claim 1, wherein:
the oxide-based solid electrolyte includes at least one lithium metal oxide or lithium metal phosphate selected from a Nasicon-type solid electrolyte, a Lisicon-type solid electrolyte, a Garnet-type solid electrolyte, a Perovskite-type solid electrolyte, or a LiPON-type solid electrolyte.

4. The electrode for a lithium secondary battery of claim 1, wherein:
the oxide-based solid electrolyte includes at least one of a LAGP(lithium aluminum germanium phosphate)-based compound, a LLZO(lithium lanthanum zirconium oxide)-based compound, a LATP(lithium aluminum titanium phosphate)-based compound, a LLZTO(lithium lanthanum zirconium tantalum oxide)-based compound, a LLTO(lithium lanthanum titanium oxide)-based compound, a LSTP(lithium silicon titanium phosphate)-based compound, or a LGPO(lithium germanium phosphate)-based compound.

5. The electrode for a lithium secondary battery of claim 1, wherein:
the oxide-based solid electrolyte has one or more particle size distributions of D50: 100 nm to 1 $\mu$m or D90: 400 nm to 1.5 $\mu$m.

6. The electrode for a lithium secondary battery of claim 1, wherein:
the oxide-based solid electrolyte has a particle size distribution of D50: 300 nm to 700 nm and D90: 400nm to 900 nm.

7. The electrode for a lithium secondary battery of claim 1, wherein:

the oxide-based solid electrolyte has a sample variance of 0.04 or less, as expressed by a following Mathematical Equation 1 through EDS analysis:

$$s^2 = \frac{\sum(y - \bar{y})^2}{n-1} = \frac{SS}{df} \qquad (1),$$

wherein:
$S^2$ is sample variance, y is a variable, $\bar{y}$ is sample mean, n is sample size, SS is a sum of squared deviations, and df is a degree of freedom.

8. The electrode for a lithium secondary battery of claim 1, wherein:
the oxide-based solid electrolyte is included in an amount of from 0.3 to 5 parts by weight based on 100 parts by weight of the electrode active material.

9. The electrode for a lithium secondary battery of claim 1, wherein:
the conductive material includes carbon nanotubes or carbon nanofibers, and the active material layer further includes a binder.

10. A lithium secondary battery comprising:

a positive electrode; a negative electrode; and an electrolyte including a lithium salt and a non-aqueous organic solvent,

wherein the electrode for a lithium secondary battery according to claim 1 is included as a positive electrode.

**11.** The lithium secondary battery according to claim 10, wherein:
the lithium salt includes at least one of: LiCl, LiBr, LiI, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, LiFSI (lithium bis(fluorosulfonyl) imide, $LiN(SO_2F)_2$), LiBETI (lithium bis(perfluoroethanesulfonyl) imide, $LiN(SO_2CF_2CF_3)_2$ or LiTFSI (lithium bis(trifluoromethanesulfonyl) imide, $LiN(SO_2CF_3)_2$).

**12.** The lithium secondary battery according to claim 10, wherein:
the lithium salt is contained in the electrolyte at a concentration of from 0.5M to 6M.

**13.** The lithium secondary battery of claim 10, wherein:

the lithium secondary battery further includes a separation membrane interposed between the positive electrode and the negative electrode, or
the electrolyte has a form of an electrolyte membrane or an electrolyte film including the lithium salt and a non-aqueous organic solvent in a polymer matrix, which is interposed between the positive electrode and the negative electrode.

**14.** A method for manufacturing an electrode for a lithium secondary battery according to claim 1, the method comprising:

mixing and dispersing the oxide-based solid electrolyte and a solvent to prepare a solid electrolyte dispersion;
mixing the solid electrolyte dispersion, the electrode active material, and the conductive material to prepare an electrode active material slurry; and
applying the electrode active material slurry to the metal current collector.

**15.** The method for manufacturing an electrode for a lithium secondary battery according to claim 14, wherein:
mixing and dispersing the oxide-based solid electrolyte and a solvent to prepare the solid electrolyte dispersion is performed using a bead-milling method.

# FIG. 1

Non-application of pre-dispersion and mixing

Solid electrode

Electrode coating

Slurry in solid electrolyte aggregate form

Schematic cross-sectional diagram of positive electrode in solid electrolyte aggregate distribution form according to the prior art

20
21
22
10

Pre-dispersing

Solid electrolyte pre-dispersion

Mixing

Slurry in solid electrolyte uniform dispersion form

Electrode coating

Schematic cross-sectional diagram of solid electrolyte uniform distribution form according to the present disclosure

FIG. 2

# FIG. 3

| | Cross-sectional SEM of the electrode | EDS (Ti, P) | | LATP sample variance value in positive electrode |
|---|---|---|---|---|
| Comparative Example 2-2 | | | | 0.045 |
| Example 2-2 | | | | 0.034 |

EP 4 738 450 A1

# FIG. 4

Resistance

40Ah Cell

Figure 4: Plot of Resistance (mΩ) versus SOC (%) for a 40Ah Cell, comparing Comparative Example 1, Comparative Example 2-2, Comparative Example 2-3, and Example 2-2.

# FIG. 5

# FIG. 6

## INTERNATIONAL SEARCH REPORT

| International application No. |
|---|
| **PCT/KR2024/012861** |

| A. | CLASSIFICATION OF SUBJECT MATTER |
|---|---|

**H01M 4/131**(2010.01)i; **H01M 4/1391**(2010.01)i; **H01M 4/525**(2010.01)i; **H01M 4/505**(2010.01)i; **H01M 4/62**(2006.01)i; **H01M 10/052**(2010.01)i; **H01M 10/058**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/131(2010.01); H01M 10/0525(2010.01); H01M 10/0562(2010.01); H01M 4/36(2006.01); H01M 4/38(2006.01); H01M 4/62(2006.01); H01M 4/64(2006.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지 (lithium secondary battery), 집전체 (current collector), 산화물계 고체 전해질 (oxide solid electrolyte), 스팬 (span), 분산 (dispersion), 입도 분포 (grain-size distribution)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2023-0106779 A1 (HONDA MOTOR CO., LTD.) 06 April 2023 (2023-04-06)<br>See abstract; paragraphs [0042]-[0044], [0057], [0058], [0061], [0064], [0069], [0073], [0074], [0081]-[0084], [0093]-[0095] and [0104]-[0106]; claims 1, 2, 5 and 6; and figure 1. | 1-15 |
| A | JP 2022-104375 A (HONDA MOTOR CO., LTD.) 08 July 2022 (2022-07-08)<br>See abstract; and paragraphs [0025], [0050] and [0051]. | 1-15 |
| A | JP 2021-106113 A (LG CHEM. LTD.) 26 July 2021 (2021-07-26)<br>See abstract; and claims 1-12. | 1-15 |
| A | JP 2021-034158 A (HONDA MOTOR CO., LTD.) 01 March 2021 (2021-03-01)<br>See abstract; and claims 1-11. | 1-15 |
| A | JP 2017-016766 A (TOYOTA MOTOR CORP.) 19 January 2017 (2017-01-19)<br>See abstract; and claim 1. | 1-15 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 November 2024** | **28 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

20

## INTERNATIONAL SEARCH REPORT
### Information on patent family members

| International application No. |
| --- |
| **PCT/KR2024/012861** |

| Patent document cited in search report | | | Publication date (day/month/year) | Patent family member(s) | | | Publication date (day/month/year) |
| --- | --- | --- | --- | --- | --- | --- | --- |
| US | 2023-0106779 | A1 | 06 April 2023 | CN | 115136343 | A | 30 September 2022 |
| | | | | JP | 7397965 | B2 | 13 December 2023 |
| | | | | WO | 2021-181529 | A1 | 16 September 2021 |
| JP | 2022-104375 | A | 08 July 2022 | CN | 114695836 | A | 01 July 2022 |
| | | | | DE | 102021134443 | A1 | 30 June 2022 |
| | | | | JP | 7239551 | B2 | 14 March 2023 |
| | | | | US | 2022-0216508 | A1 | 07 July 2022 |
| JP | 2021-106113 | A | 26 July 2021 | JP | 7376348 | B2 | 08 November 2023 |
| JP | 2021-034158 | A | 01 March 2021 | CN | 112420980 | A | 26 February 2021 |
| | | | | CN | 112420980 | B | 13 September 2024 |
| | | | | JP | 7082096 | B2 | 07 June 2022 |
| | | | | US | 11894541 | B2 | 06 February 2024 |
| | | | | US | 2021-0057713 | A1 | 25 February 2021 |
| JP | 2017-016766 | A | 19 January 2017 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2024012861 W

- KR 1020230113515